# EUROPEAN PATENT SPECIFICATION

(11) **EP 3 351 097 B1**
(45) Date of publication and mention of the grant of the patent: **13.05.2020**
(21) Application number: 15903788.6
(22) Date of filing: 14.09.2015
(51) Int. Cl.: A01K 75/06

(54) **MODULAR SNAP FASTENER AND FISHING TOOL SINKING ROPE ADOPTING SAME**
MODULARER DRUCKKNOPF UND SENKSEIL FÜR FISCHWERKZEUG DAMIT
ÉLÉMENT DE FIXATION PAR PRESSION MODULAIRE ET FILIN PLONGEANT D'OUTIL DE PÊCHE L'EMPLOYANT

(43) Date of publication of application: 25.07.2018
(73) Proprietor: Hsieh Fou Fishing Tackles Industry Co., Ltd., Kaohsiung City 806 (TW)
(72) Inventor: YEH, Jui-Wen, Kaohsiung City 806 (TW); YEH, Yu-Hao, Kaohsiung City 806 (TW)
(74) Representative: Spengler, Robert
(86) International application number: PCT/CN2015/089513
(87) International publication number: WO 2017/045097

(56) References cited:
- WO-A1-02/28176
- CN-Y- 201 174 933
- DE-A1-102011 102 740
- JP-A- 2006 020 626
- KR-A- 20090 012 596
- TW-A- 200 601 963
- TW-U- M 454 089
- US-A- 5 233 786

## Description

### BACKGROUND OF THE INVENTION

### 1. Field of the Invention

The present invention relates to a fishing tool, and more particularly to a modular snap fastener and a fishing tool sinking rope using the same.

### 2. Description of the Related Art

A sinking rope for conventional fishing net is composed of counterweight lead sinkers. A core line is covered inside a plurality of counterweight lead sinkers, so that a plurality of lead sinkers can string together by means of the same core line to form a continuous chain. When in use, the sinking rope is knotted on the lower net rope, so when casting the fishing net, through sinking counterweight of sinking heavy rope and floats on the upper net rope, the lower net rope is automatically pulled downward and the fishing net can be cast vertically, so that the goal of quickly casting a fishing net can be achieved.

Please refer to Taiwan Utility Model Patent Publication No. M256071, "Improving Structure of Fishing Net", which comprises a net main body, a floating rope set and a counterweight rope set. The floating rope set combines a plurality of upper wearing gears configured on the net main body, and the counterweight rope set combines a plurality of lower wearing gears configured on the net main body. The lead rope set includes a net rope and a woven net rope, and a plurality of counterweight bodies are covered inside the woven net rope at intervals and in sections. Between two adjacent counterweight bodies, the woven net rope is knotted with the net rope, so that it can prevent the lead rope set from improper entanglement during casting or dragging operation.

Please refer to Taiwan Utility Model Patent Publication No. M454089, "Improved Structure of Weight Rope Used in Fishing Net", which comprises a hollow net rope, a first counterweight chain and a second counterweight chain. The first and the second counterweight chain are disposed inside the hollow net rope. Each counterweight chain comprises a plurality of counterweight block lined at equal intervals. The interval between the first and the second counterweight chains is not less than the first interval of the first counterweight block, so that the hollow net rope can include a stringing section with natural narrow tube diameter. Therefore, the goal that multiple-segment counterweight chains can be naturally fixed and the function of automated stringing on the lower rope can be obtained. The counterweight chain is strung by a plurality of counterweight blocks which will limit its volume and size, so the intervals between counterweight blocks cannot be adjusted and controlled, and the counterweight blocks also easily separate from the lead rope.

### SUMMARY OF EMBODIMENTS OF THE INVENTION

Therefore, an objective of the present invention is to provide a fishing tool sinking rope and modular snap fastener of using the same. Through the quickly connector, the sinking element and the modular snap fastener can be quickly assembled to form a string of the module stringing core serving as a center line of circular knitting machine to produce the fishing tool sinking rope, so that the automated production of covering the sinking elements at equal intervals can be achieved during the weaving process of the covering rope.

Another objective of an embodiment of the present invention is to provide a fishing tool sinking rope and modular snap fastener of using the same, by which a plurality of sinking elements can be automatically covered insides the sinking rope at equal intervals. Therefore, a conventional circular knitting machine can be used to produce the fishing tool sinking rope, and the intervals between sinking elements can be adjusted and controlled by determined modular snap fastener, so it is not necessary to string the sinking elements to form a chain, and the main body of the sinking elements can have variation in volume, size and interval. When the fishing tool sinking rope is cast under the sea, it will have twilight effect and will not easily entangle with net to cause separation.

The object and solution is achieved by a fishing tool sinking rope disclosed by the present invention according to claim 1, comprising a module stringing core and a covering woven rope. The module stringing core is configured to string a plurality of sinking elements at equal intervals. Each of the sinking elements comprises a main body having two ends connected jointly to a neck portion and a terminal portion. The neck portion has a radial cross-sectional size less than a radial cross-sectional size of the main body and a radial cross-sectional size of the terminal portion. The module stringing core further comprises a plurality of modular snap fasteners. Each modular snap fastener includes a bendable line and a plurality of droplet-shaped hollow snap fastening members connected to two ends of the bendable line for housing a plurality of terminal portions. Each of the hollow snap fastening members is comparatively distant from the center of corresponding modular snap fasteners and has a U-shaped gap snap fastening slot configured to fit the neck portion. The covering woven rope is interlaced to cover the module stringing core. A modular snap fastener used in the fishing tool sinking rope is disclosed by the present invention according to claim 13.

The object and solution can be further achieved by the method depicted below.

In the aforementioned fishing tool sinking rope, the hollow snap fastening member is semi-covered, and protrusions on the two sides of the U-shaped gap snap fastening slot are flexible for clamping, so that the U-shaped gap snap fastening slot can easily fit the corresponding neck portion.

In the aforementioned fishing tool sinking rope, the shape of the terminal portion can be spherical, so when the sinking element rotates, the terminal portion will not separate from the corresponding hollow snap fastening member.

In the aforementioned fishing tool sinking rope, the radial cross-sectional size of the terminal portion is particularly less than the radial cross-sectional size of the main body, so that the radial cross-sectional size of hollow snap fastening members will not protrude over the radial cross-sectional size of the main body. Therefore, the terminal portion will not easily separate from the hollow snap fastening member.

In the aforementioned fishing tool sinking rope, preferably, the cross section of the hollow snap fastening members is semi-cut and is a tapered edge leaning toward the opening of the U-shaped gap snap fastening slot for helping the U-shaped gap snap fastening slot fit the corresponding neck portion.

In the aforementioned fishing tool sinking rope, the shape of the main body can be cylindrical, so that the sinking elements can have a better volume for operation, and when the sinking elements rotate, it will not damage the covering woven rope.

In the aforementioned fishing tool sinking rope, the shape of the main body can be oval, so that the sinking elements can help covering woven rope for its covering operation.

In the aforementioned fishing tool sinking rope, at least a plurality of main bodies can be a counterweight chain to adjust the counterweight section of sinking rope.

According to the aforementioned methods, an advantage of an embodiment of the invention is that through a creative combination of module stringing core, the sinking element and the modular snap fastener can be quickly assembled by the quickly connector to form a string of the module stringing core serving as a center line of circular knitting machine and produce the fishing tool sinking rope. Therefore, the automated production of covering the sinking elements at equal intervals can be achieved during the weaving process of the covering rope. Besides, a plurality of sinking elements can be automatically covered insides the sinking rope at equal intervals.

### BRIEF DESCRIPTION OF THE DRAWINGS

FIG. 1 is a partial exploded view of a fishing tool sinking rope in a first preferred embodiment according to the present invention;
FIG. 2 is a partial exploded view of the module stringing core in the first preferred embodiment;
FIG. 3A to 3C are exploded view, cross-sectional side view and front view of the sinking elements in the first preferred embodiment;
FIG. 4A to 4D are exploded view, cross-sectional side view, front view and bottom view of the modular snap fastener in the first preferred embodiment;
FIG. 5 is a drawing depicting that a fishing tool sinking rope assembles a fishing net in the first preferred embodiment;
FIG. 6 is a partial exploded view of a fishing tool sinking rope in a second preferred embodiment according to the present invention;
FIG. 7 is a partial exploded view of the module stringing core in the second preferred embodiment;
FIG. 8A to 8C are exploded view, cross-sectional side view and front view of the sinking element in the second preferred embodiment;
FIG. 9A to 9C are exploded view, cross-sectional side view and front view of the sinking element in a third preferred embodiment according to the present invention;
FIG. 10A to10C are exploded view, cross-sectional side view and front view of the sinking element in a fourth preferred embodiment according to the present invention; and
FIG. 11 is a partial exploded view depicting that another fishing tool sinking rope axially cuts the covering woven rope in a fifth preferred embodiment according to the present invention.

### DETAILED DESCRIPTION OF THE PREFERRED EMBODIMENTS

Specific structural and functional details disclosed herein will become apparent from the following description of the preferred embodiment of the present invention taken in conjunction with the accompanying drawings, which provides better an understanding to a person having ordinary skill in the art but shall not be construed as limiting the invention.

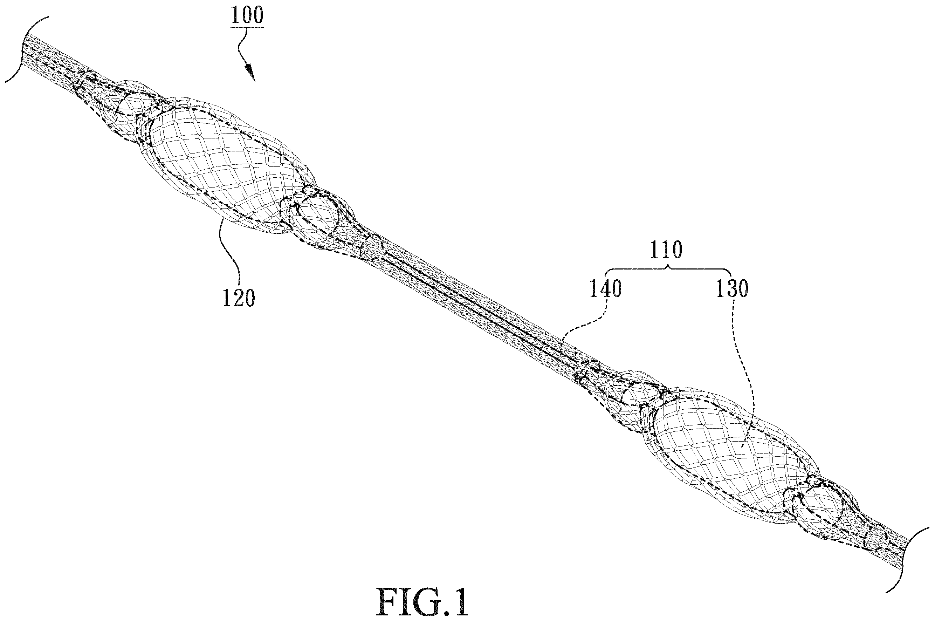

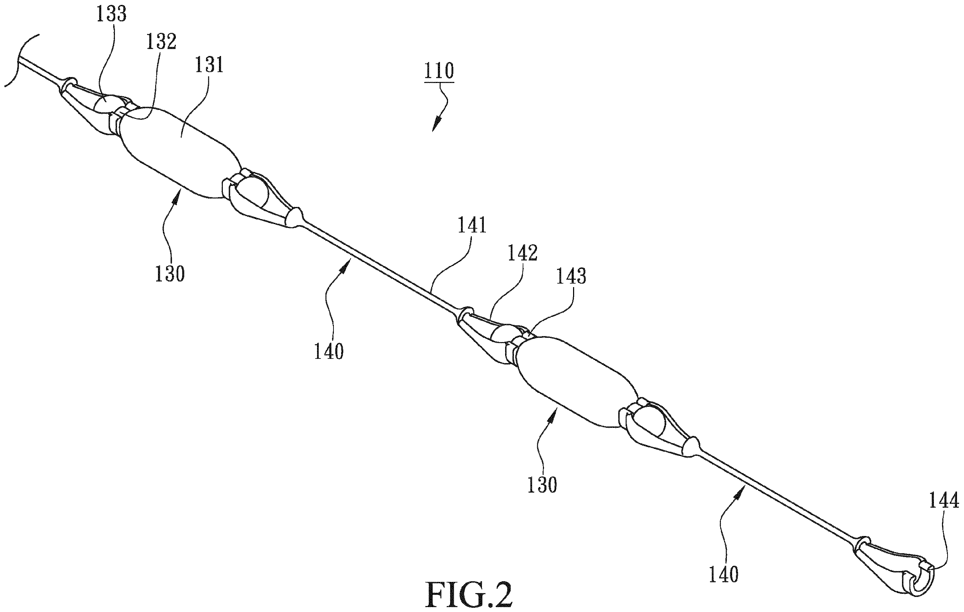

With reference to FIG. 1, a partial exploded view of a fishing tool sinking rope 100 in the first preferred embodiment according to the present invention. A fishing tool sinking rope 100 comprises a module stringing core 110 and a covering woven rope 120. The covering woven rope 120 is interlaced to cover the module stringing core 110. With reference to FIG. 2, a partial exploded view of the module stringing core 110 is depicted.

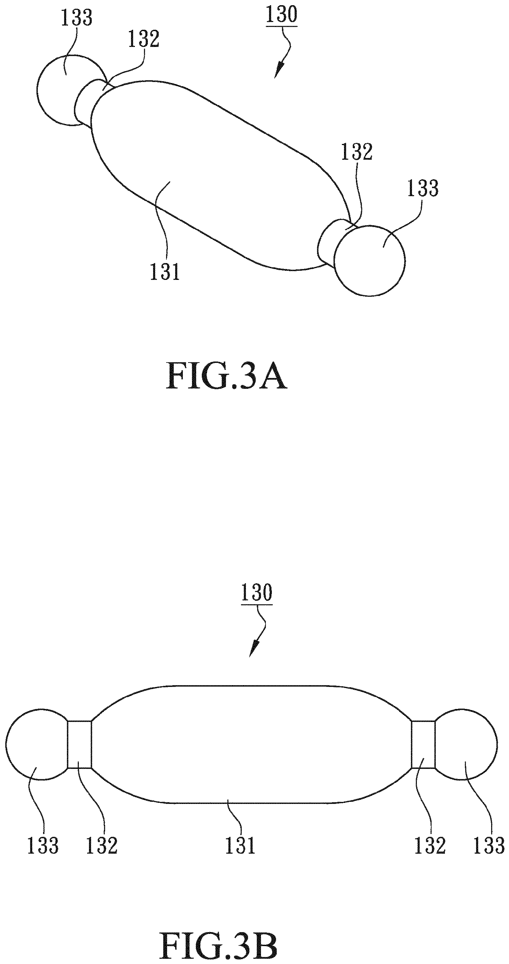

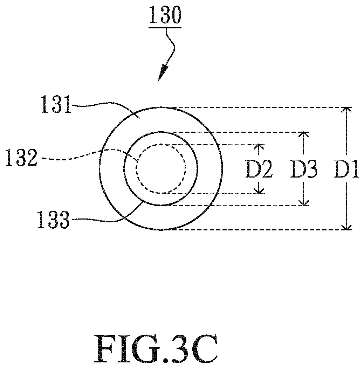

With reference to FIG. 2, the module stringing core 110 is configured to string a plurality of sinking elements 130 at equal intervals. With reference to FIG. 3A, 3B and 3C, exploded view, cross-sectional side view and front view of the sinking elements 130 are depicted. Each of the sinking elements 130 has a main body 131 having two ends connected jointly to a neck portion 132 and a terminal portion 133. The neck portion 132 has a radial cross-sectional size D2 less than radial cross-sectional size D1 of the main body and radial cross-sectional size D3 of the terminal portion 133 (shown in the FIG. 3C). By different radial cross-sectional size, the rotation of the sinking element 130 in the covering woven rope 120 can be reduced. The axial direction means the direction between two terminal portions 133 on the same sinking element 130, and the radial direction means the direction or panel parallel to the axial direction. The radial cross-sectional size named herein means that the largest size is obtained based on an object parallel to the axial direction. Different radial cross-sectional sizes of the sinking elements 130 are shown in the FIG. 3C, the front view of the sinking elements. Furthermore, the module stringing core 110 is a bendable strung object used for rolling and storing. The length of module stringing core 110 is adjustable on demand to meet the requirement of different fishing tool sinking rope. The sinking element 130 can be made from sinking objects which have density larger than water or seawater, so that it can sink into the water. The material of sinking element 130 can be lead, lead-tin compounds or metals with relatively high densities. The unit length of main body 131 can be larger than the unit lengths of the neck portion 132 and the terminal portion 133. With reference to FIG. 3A and 3B, the shape of main body 131 is cylindrical, so that the sinking element 130 can have a better volume for operation, and when the sinking element 130 rotates, it will not damage the covering woven rope 120.

With reference to FIG. 1, the covering woven rope 120 can cover the sinking elements 130 at equal intervals. The covering woven rope 120 can be made from water-proof plastics, and can be interlaced with multiple strands by the circular knitting machine. The way that the covering woven rope 120 covers the module stringing core 110 is interlacing. The so called "interlacing" means that the module stringing cores 110 string together to be the core line of the covering woven rope 120. The multiple thin strands are interlaced around the module stringing core 110 to produce the covering woven rope 120, so that the sinking elements 130 can have a better covering and automated knitting operation. The definition of "interlacing" doesn't include the operation which is like to produce the covering woven rope 120 first which is plugged into the module stringing core 110 (or the sinking elements 130) later.

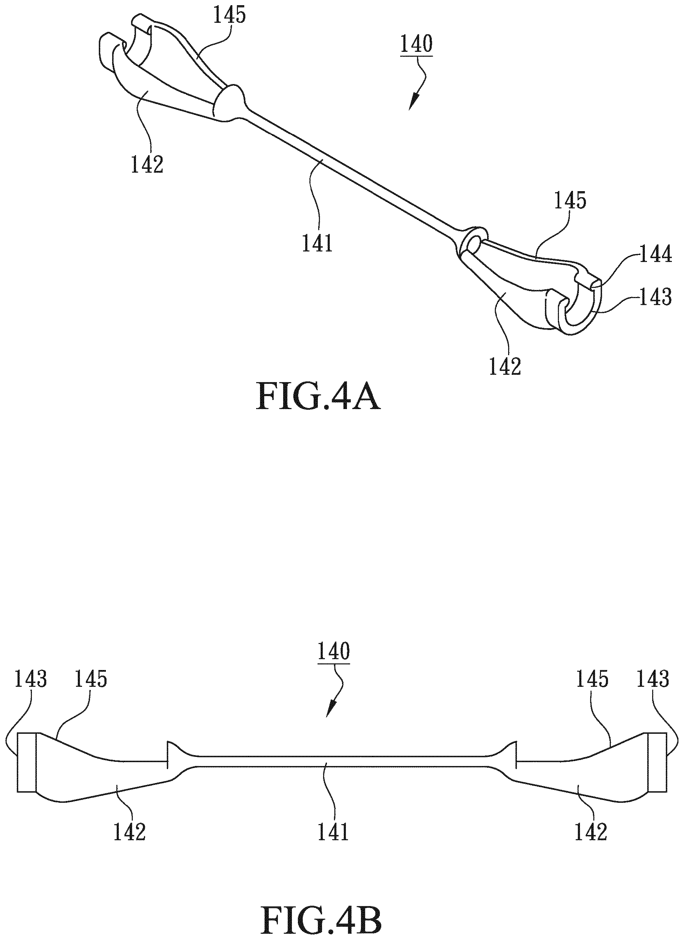

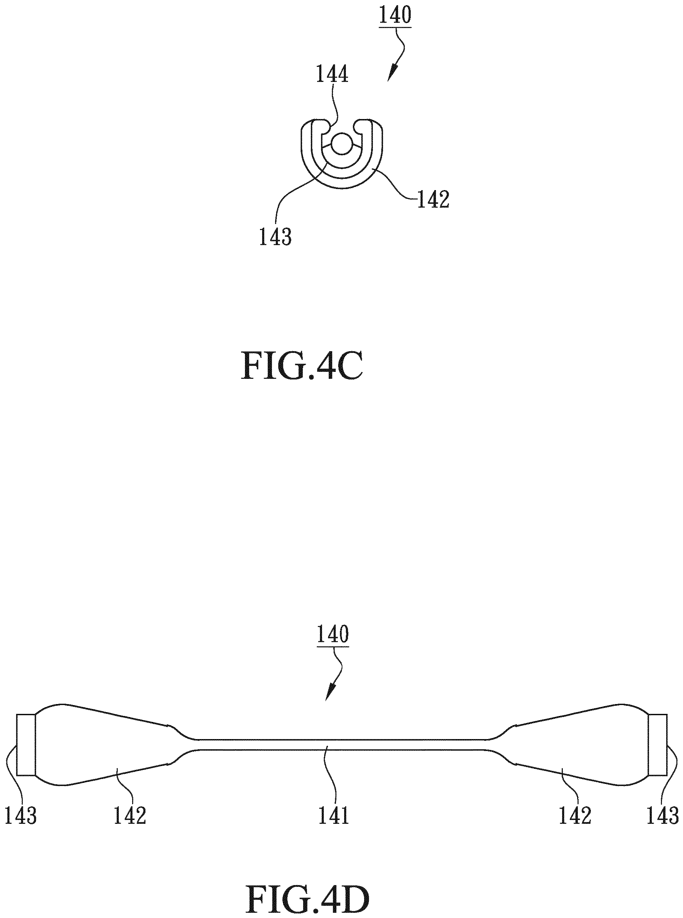

With reference to FIG. 2, in this preferred embodiment, the module stringing core 110 further comprises a plurality of modular snap fastener 140. With reference to 4A, 4B, 4C and 4D, exploded view, cross-sectional side view, front view and bottom view of the module stringing core 140 are depicted. Each modular snap fastener 140 comprises a bendable line 141 and a plurality of hollow snap fastening members 142 connected to two ends of the bendable line 141 for housing the terminal portions 133. The shape of the hollow snap fastening members 142 is droplet-shaped., and please refer to FIG. 4. Besides, each of the hollow snap fastening members 142 is comparatively distant from the center of corresponding modular snap fasteners 140 and has a U-shaped gap snap fastening slot 143 configured to fit the neck portion 132, so the sinking elements 130 can string at equal intervals. The bendable line 141 can bend following with the movement of covering woven rope 120 to maintain the intervals between the sinking elements 130. The modular snap fastener 140 can be made from water-proof plastics. The extension force of the bendable line 141 is larger than the weaving extension of the covering woven rope 120. The shape of the hollow snap fastening members 142 can house and fit the terminal portion 133. The cross-section size of the U-shaped gap snap fastening slot 143 can be less than the radial cross-section size D1 of the main body 131 and the radial cross-section size D3 of the terminal portion 133, so the U-shaped gap snap fastening slot 143 can fit the neck portion 132. With reference to FIG. 2, depending on the determined modular snap fastener 140, the unit length of the bendable line body 141 is larger than the unit length of the sinking element 130, and it can also equal to or less than the unit length of the sinking element 130, so that the equal intervals between the sinking elements 130 can be controlled.

With reference to FIG. 4A to 4C, the hollow snap fastening members 142 is semi-covered, so it can have flexible protrusions 144 on the two sides of the U-shaped gap snap fastening slot 143 for clamping, and the U-shaped gap snap fastening slot 143 can easily fit the corresponding neck portion 132. The two opposite protrusions 144 is less than the radial cross-section size of the neck portion 132. The protrusions 144 can help the modular snap fastener 140 fit the neck portion 132. The semi-covered hollow snap fastening members 142 helps the modular snap fastener 140 combine with or separate from the sinking element 130. Preferably, the cross section of the hollow snap fastening members 142 is semi-cut and is a tapered edge 145 (shown in FIG. 4B) leaning toward the opening of the U-shaped gap snap fastening slot 143 for helping the U-shaped gap snap fastening slot 143 fit the corresponding neck portion 132 in axial direction, which will larger than the force that the U-shaped gap snap fastening slot 143 presses on the neck portion 132 in radius. Therefore, it is easy to fasten the module and the module will not break easily.

With reference to FIG. 3A and 3B, preferably, the shape of the terminal portion 133 is spherical, so when the sinking element 130 rotates, the terminal portion 133 will not separate from the corresponding hollow snap fastening member 142, and it can reduce the damage of the covering woven rope 120. With reference to FIG. 3C, the radial cross-section size D3 of terminal portion 133 is less than the radial cross-section size D1 of main body 131, so that the radial cross-section size of the hollow snap fastening members 142 will not protrude over the the radial cross-section size D1 of the main body 131. Therefore, the terminal portion 133 will not easily separate from the hollow snap fastening member 142.

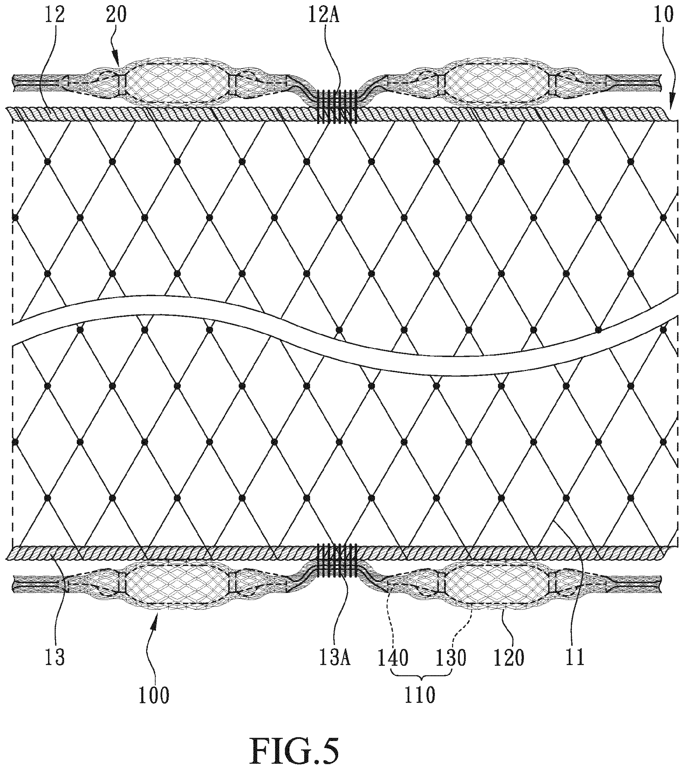

With reference to FIG. 5, a drawing depicting that a fishing tool sinking rope 100 assembles a fishing net. The fishing net 10 comprise a net body composed of a plurality of net lines 11, an upper net rope 12 and a lower net rope 13, wherein the upper net rope 12 is positioned on the upper edge of the net body, and the lower net rope 13 is positioned on the lower edge of the net body. A fishing tool sinking rope 20 is combined with the upper net rope 12 by a plurality of upper net rope stringing areas 12A. The fishing tool sinking rope 100 is combined with the lower net rope 13 by a plurality of lower net rope stringing areas 13A. When the fishing net is cast on the ocean, the net body composed of a plurality of net lines 11 will be extended. While drawing back the fishing net 10, the fishing tool sinking rope 100 will not entangle with the net lines 11. The section where the fishing tool sinking rope 100 is provided with a plurality of sinking elements 130 is in a high counterweight status, while the section where the fishing tool sinking rope 100 is provided with a plurality of modular snap fastener 140 is in a low counterweight status. When water flowing or the net is dragged, the section where the fishing tool sinking rope 100 is provided with a plurality of modular snap fastener 140 can be a buffer area to undulatingly disperse different stress, and the fishing net 10 will not move obviously. Therefore, when the fishing tool sinking rope is cast under the sea, it will have twilight effect and will not easily entangle with net to cause separation.

Therefore, a fishing tool sinking rope is disclosed by the present invention. Through a creative combination of module stringing core, the sinking element 130 and the modular snap fastener 140 can be quickly assembled by the quickly connector to form a string of the module stringing core 110 serving as a center line of circular knitting machine to produce the fishing tool sinking rope 100, so that the automated production of covering the sinking elements at equal intervals can be achieved during the weaving process of the covering rope. Besides, a plurality of sinking elements 13 can be automatically covered insides the sinking rope 100 at equal intervals. Therefore, a conventional circular knitting machine can be used to produce the fishing tool sinking rope, and the intervals between sinking elements 130 can be adjusted and controlled by determined modular snap fastener, so it is not necessary to string the sinking elements 130 to form a chain, and the main body of the sinking elements can have variation in volume, size and interval.

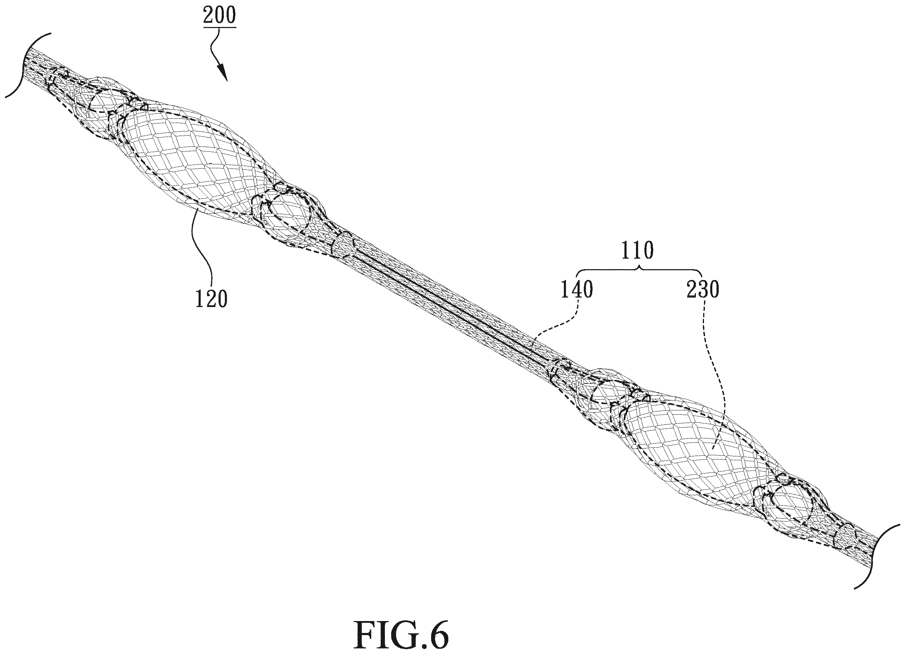

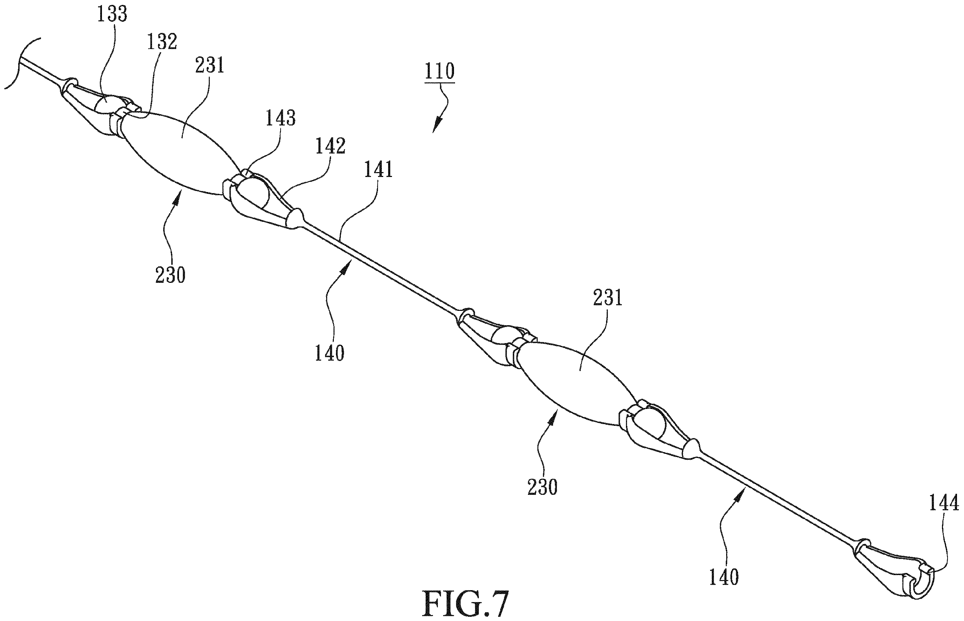

With reference to FIG. 6, a partial exploded view of a fishing tool sinking rope 200 in a second preferred embodiment of the present invention is depicted. Elements with the same name and function corresponding to the one in the first preferred embodiment are labeled with the same reference numbers, and so common features are not described again. A fishing tool sinking rope 200 comprises a module stringing core 110 and a covering woven rope 120. The covering woven rope 120 is interlaced to cover the module stringing core 110. With reference to FIG. 7, a partial exploded view of the module stringing core 110 is depicted.

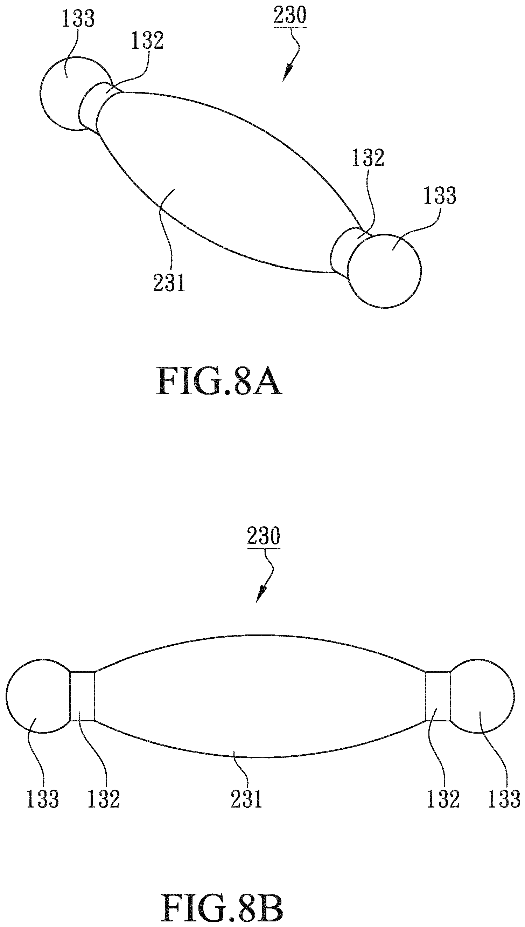

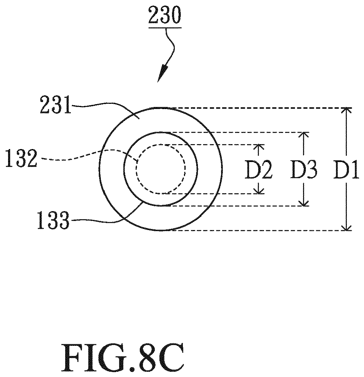

With reference to FIG. 7, the module stringing core 110 is configured to string a plurality of sinking elements 230 at equal intervals. With reference to FIG. 8A, 8B and 8C, exploded view, cross-sectional side view and front view of the sinking elements 130 are depicted. Each of the sinking elements 230 has a main body 231 having two ends connected jointly to a neck portion 132 and a terminal portion 133. The neck portion 132 has a radial cross-sectional size D2 less than radial cross-sectional size D1 of the main body 231 and radial cross-sectional size D3 of the terminal portion 133 (shown in the FIG. 8C). The sinking element 230 can be made from sinking objects which have density larger than water or seawater, so that it can sink into the water. With reference to FIG. 8A and 8B, the shape of the main body 231 can be oval, so that the sinking elements 230 can help covering woven rope 120 for its covering operation.

With reference to FIG. 7, in this preferred embodiment, the module stringing core 110 preferably further comprises a plurality of modular snap fasteners 140, and each modular snap fastener 140 comprises a bendable line 141 and a plurality of hollow snap fastening members 142 connected to two ends of the bendable line 141 for housing the terminal portions 133. Each of the hollow snap fastening members 142 is comparatively distant from the center of corresponding modular snap fasteners 140 and has a U-shaped gap snap fastening slot 143 configured to fit the neck portion 132. Therefore, the sinking elements 230 can string at equal intervals.

Preferably, the shape of the terminal portion 133 can be spherical, so when the sinking element 230 rotates, the terminal portion 133 will not separate from the corresponding hollow snap fastening member 142. Besides, the radial cross-sectional size D3 of the terminal portion 133 is particularly less than the radial cross-sectional size D1 of the main body 231, so that the radial cross-sectional size of hollow snap fastening members 142 will not protrude over the radial cross-sectional size D1 of the main body 131. Therefore, the terminal portion 133 will not easily separate from the hollow snap fastening member 142.

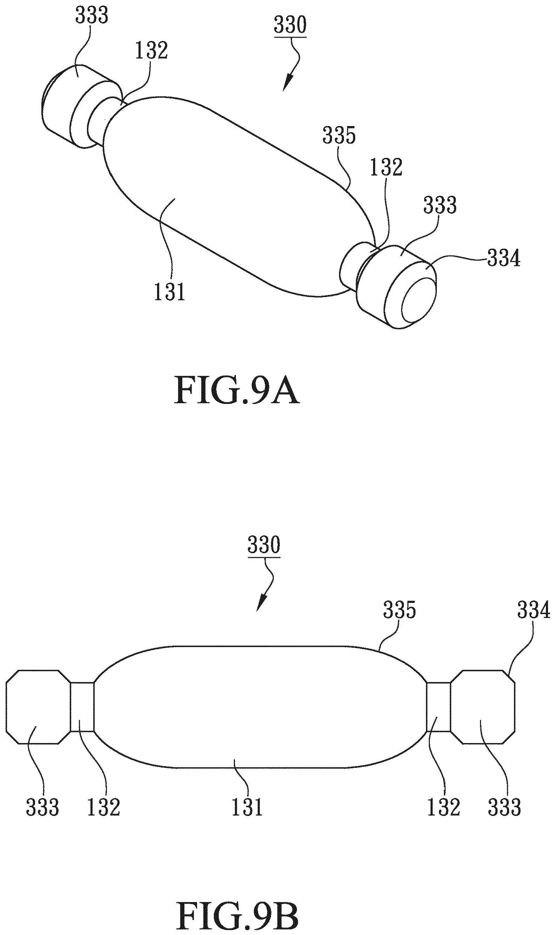

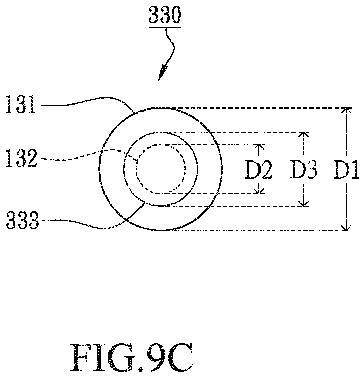

According to a third preferred embodiment of the present invention, a fishing tool sinking rope is provided. Elements with the same name and function corresponding to the one in the first preferred embodiment are labeled with the same reference numbers, and so common features are not described again. A fishing tool sinking rope comprises a module stringing core and a covering woven rope. The covering woven rope is interlaced to cover the module stringing core. The module stringing core is configured to string a plurality of sinking elements 330 at equal intervals. With reference to 9A, 9B and 9C, exploded view, cross-sectional side view and front view of the sinking element 330 are depicted. Each of the sinking elements 330 comprises a main body 131 having two ends connected jointly to a neck portion 132 and a terminal portion 333. The neck portion 132 has a radial cross-sectional size D2 less than a radial cross-sectional size D1 of the main body 131 and a radial cross-sectional size D3 of the terminal portion 333 (shown in the FIG. 9C). The modular snap fastener 140 in the first preferred embodiment can be used to fit the neck portions 132 of the sinking elements 330, and is semi-covered to cover the terminal portions 333 of the sinking elements 330. In this preferred embodiment, the shape of the terminal portion 333 is non-spherical, such as a circle with thickness at least less than half the diameter, a cylinder with length near the diameter, a cone with length not larger than the diameter or a combination thereof, and a plurality of faceted edges 334 are formed around the terminal portion 333, so that the terminal portion 333 will not have the edge of a right or acute angle to reduce the damage of the covering woven rope caused by the terminal portion 333. Preferably, a convergent curved surface 335 formed between the main body 131 of the sinking element 330 and the neck portion 132 helps reduce the damage and deviation of the covering woven rope caused by the main body 131 of the sinking element 330. The convergent curved surface 335 can help increase the volume of the sinking element 330.

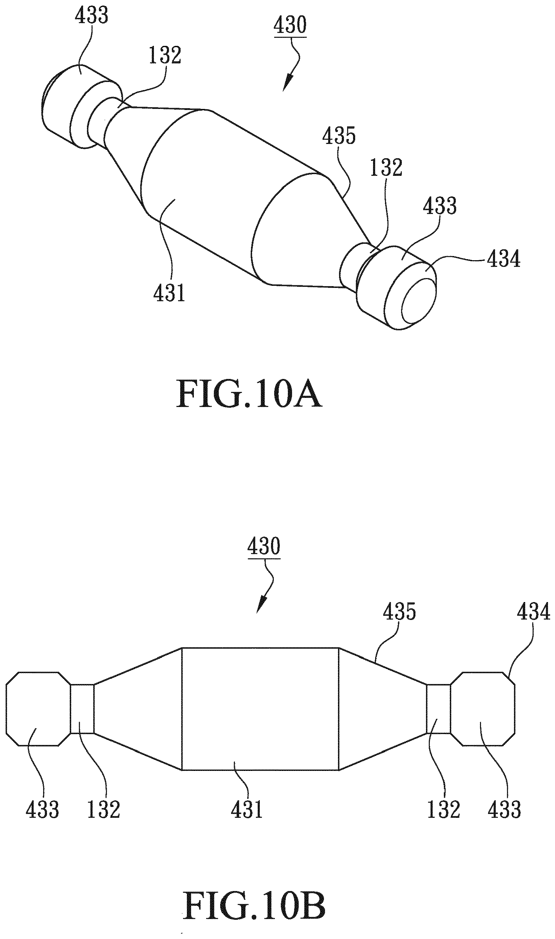

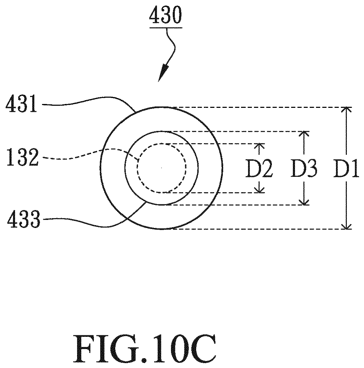

According to a fourth preferred embodiment of the present invention, a fishing tool sinking rope is provided, comprising a module stringing core and a covering woven rope. The covering woven rope is interlaced to cover the module stringing core. The module stringing core is configured to string a plurality of sinking elements 430 at equal intervals. With reference to 10A, 10B and 10C, exploded view, cross-sectional side view and front view of the sinking element 430 are depicted. Each of the sinking elements 430 comprises a main body 131 having two ends connected jointly to a neck portion 132 and a terminal portion 433. The neck portion 132 has a radial cross-sectional size D2 less than a radial cross-sectional size D1 of the main body 131 and a radial cross-sectional size D3 of the terminal portion 433 (shown in the FIG. 10C). The modular snap fastener 140 in the first preferred embodiment can be used to fit the neck portions 132 of the sinking elements 430, and is semi-covered to cover the terminal portions 433 of the sinking elements 430. In this preferred embodiment, the shape of the terminal portion 433 is non-spherical, such as a cylinder with length near the diameter, and a plurality of faceted edges 434 are formed around the terminal portion 433, so that the terminal portion 433 will not have the edge of a right or acute angle to reduce the damage of the covering woven rope caused by the terminal portion 433. Preferably, a convergent tapered surface 435 formed between the main body 131 of the sinking elements 430 and the neck portion 132 helps reduce the damage and deviation of the covering woven rope caused by the main body 131 of the sinking element 430. The convergent tapered surface 435 can help covering woven rope 120 for its covering operation

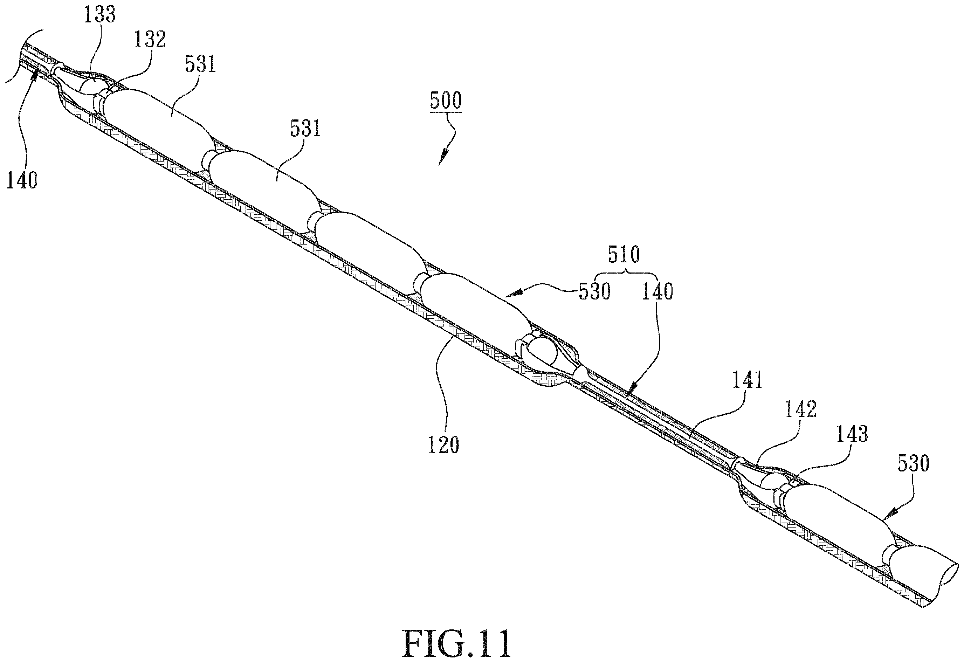

With reference to FIG. 11, a partial exploded view depicting that a fishing tool sinking rope axially cuts the covering woven rope in a fifth preferred embodiment according to the present invention is depicted. Elements with the same name and function corresponding to the one in the first preferred embodiment are labeled with the same reference numbers, and so common features are not described again. A fishing tool sinking rope 500 comprises a module stringing core 510 and a covering woven rope 120. The covering woven rope 120 is interlaced to cover the module stringing core 510.

The module stringing core 510 is configured to string a plurality of sinking elements 530 at equal intervals. Each of the sinking elements 530 has a main body 531 having two ends connected jointly to a neck portion 132 and a terminal portion 133. The neck portion 132 has a radial cross-sectional size less than radial cross-sectional sizes of the main body 531 and the terminal portion 133. The module stringing core 510 further comprises a plurality of modular snap fasteners 140, and each modular snap fastener 140 comprises a bendable line 141 and a plurality of hollow snap fastening members 142 connected to two ends of the bendable line 141 for housing the terminal portions 133. Each of the hollow snap fastening members 142 is comparatively distant from the center of corresponding modular snap fasteners 140 and has a U-shaped gap snap fastening slot 143 configured to fit the neck portion 132. Preferably, at least a plurality of main bodies can be a counterweight chain, namely the main body 531 is strung by a plurality of smaller sinking element blocks, and a plurality of the main bodies 531 of sinking elements 530 can bend or extend the counterweight length of the sinking rope, so that the goal of adjusting the counterweight section of sinking rope can be achieved. The stringing relationship between sinking element blocks and the connection between the main body 531 and the adjacent terminal portions 133 can be classified as connected jointly, line knotting after forming, center line stringing after forming, or mold, hook or snap placed inside the center line while foaming. More particularly, the unit interval between the sinking element blocks is less than the unit length of the bendable line 141.

The foregoing detailed description is merely in relation to a preferred embodiment and shall not be construed as limiting the invention. It is to be understood that many other possible modifications and variations can be made without departing from the scope of the invention defined by the appended claims.

## Claims

1. A fishing tool sinking rope (20, 100, 200, 500) comprising:
a module stringing core (110, 510) configured to string a plurality of sinking elements (130, 230, 330, 430, 530) at equal intervals, each of the sinking elements (130, 230, 330, 430, 530) having a main body (131, 231, 531) having two ends connected each to a neck portion (132) and a terminal portion (133, 333, 433), wherein the neck portion (132) has a radial cross-sectional size less than radial cross-sectional sizes of the main body (131, 231, 531) and the terminal portion (133, 333, 433), the module stringing core (110, 510) further comprising a plurality of modular snap fasteners (140), each modular snap fastener (140) comprising a bendable line (141) and two hollow snap fastening members (142) connected to two ends of the bendable line (141) for housing the terminal portions (133, 333, 433), and each of the hollow snap fastening members (142) is comparatively distant from the center of corresponding modular snap fasteners (140) and having a U-shaped gap snap fastening slot (143) configured to fit the neck portion (132); and a covering woven rope (120) interlaced to cover the module stringing core (110, 510).

2. The fishing tool sinking rope (20, 100, 200, 500) as claimed in claim 1, **characterized in that** the shape of the terminal portion (333, 433) is non-spherical, and a plurality of faceted edges (334, 434) are formed around the terminal portions (333, 433).

3. The fishing tool sinking rope (20, 100, 200, 500) as claimed in claim 1, **characterized in that** a convergent curved surface (335) is formed between the main body (131, 231, 531) and the neck portion (132).

4. The fishing tool sinking rope (20, 100, 200, 500) as claimed in claim 1, **characterized in that** a convergent tapered surface (435) is formed between the main body (131, 231, 531) and the neck portion (132).

5. The fishing tool sinking rope (20, 100, 200, 500) as claimed in claim 1, **characterized by** droplet-shaped hollow snap fastening members (142).

6. The fishing tool sinking rope (20, 100, 200, 500) as claimed in claim 5, **characterized in that** the hollow snap fastening member (142) is semi-covered, and protrusions (144) on the two sides of the U-shaped gap snap fastening slot (143) are flexible for clamping.

7. The fishing tool sinking rope (20, 100, 200, 500) as claimed in claim 6, **characterized in that** the shape of the terminal portion (133) is spherical.

8. The fishing tool sinking rope (20, 100, 200, 500) as claimed in claim 7, **characterized in that** the radial cross-sectional size of the terminal portion (133, 333, 433) is less than the radial cross-sectional size of the main body (131, 231, 531), so that a radial cross-sectional size of hollow snap fastening members (142) will not protrude over the radial cross-sectional size of the main body (131, 231, 531).

9. The fishing tool sinking rope (20, 100, 200, 500) as claimed in claim 6, **characterized in that** the cross section of the hollow snap fastening members (142) is semi-cut and is a tapered edge (145) leaning toward the opening of the U-shaped gap snap fastening slot (143).

10. The fishing tool sinking rope (20, 100, 200, 500) as claimed in claim 5-9, **characterized in that** the shape of the main body (131, 231, 531) is cylindrical.

11. The fishing tool sinking rope (20, 100, 200, 500) as claimed in claim 5-10, **characterized in that** the shape of the main body (131, 231, 531) is oval.

12. The fishing tool sinking rope (20, 100, 200, 500) as claimed in claim 5-11, **characterized in that** at least a main body (131, 231, 531) is a counterweight chain.

13. A modular snap fastener (140) for the fishing tool sinking rope (20, 100, 200, 500) as claimed in claim 1, wherein said modular snap fastener (140) is configured to string a plurality of sinking elements (130, 230, 330, 430, 530) at equal intervals, each of the sinking elements (130, 230, 330, 430, 530) having a main body (131, 231, 531) having two ends connected each to a neck portion (132) and a terminal portion (133, 333, 433), wherein the neck portion (132) has a radial cross-sectional size less than radial cross-sectional sizes of the main body (131, 231, 531) and the terminal portion (133, 333, 433), the modular snap fastener (140) comprising: a bendable line (141); and two droplet-shaped hollow snap fastening members (142) connected to two ends of the bendable line (141) for housing a plurality of terminal portions (133, 333, 433), each of the hollow snap fastening members (142) being comparatively distant from the center of corresponding modular snap fasteners (140) and has a U-shaped gap snap fastening slot (143) configured to fit the neck portion (132).

14. The modular snap fastener (140) as claimed in claim 13, **characterized in that** the hollow snap fastening member (142) is semi-covered, and protrusions (144) on the two sides of the U-shaped gap snap fastening slot (143) are flexible for clamping.

15. The modular snap fastener (140) as claimed in claim 14, **characterized in that** the cross section of the hollow snap fastening members (142) is semi-cut and is a tapered edge (145) leaning toward the opening of the U-shaped gap snap fastening slot (143).

## Patentansprüche

1. Sinkleine (20, 100, 200, 500) eines Fischfangwerkzeugs, umfassend: einen Modulaufziehkern (110, 510), der zum Aufziehen einer Mehrzahl Sinkkörper (130, 230, 330, 430, 530) in gleichen Abständen konfiguriert ist, wobei jeder der Sinkkörper (130, 230, 330, 430, 530) einen Hauptteil (131, 231, 531) mit zwei Enden aufweist, die jeweils mit einem Halsabschnitt (132) und einem Endabschnitt (133, 333, 433) verbunden sind, wobei der Halsabschnitt (132) einen radialen Querschnitt aufweist, der kleiner ist als die radialen Querschnitte des Hauptteils (131, 231, 531) und des Endabschnitts (133, 333, 433), und der Aufziehkern (110, 510) ferner eine Mehrzahl modularer Druckknöpfe (140) umfasst, wobei jeder Druckknopf (140) eine biegbare Leine (141) und zwei hohle Schnappverschlusselemente (142) umfasst, die mit zwei Enden der Leine (141) verbunden sind, um die Endabschnitte (133, 333, 433) einzuschließen, und jedes der Schnappverschlusselemente (142) vom Mittelpunkt der entsprechenden Druckknöpfe (140) vergleichsweise weit entfernt ist und einen Schnappverschlussschlitz (143) mit U-förmigem Spalt umfasst, der derart konfiguriert ist, dass er zum Halsabschnitt (132) passt, und in verwebtes Deckseil (120), das zur Abdeckung des Aufziehkerns (110, 510) verflochten ist.

2. Sinkleine (20, 100, 200, 500) nach Anspruch 1, **dadurch gekennzeichnet, dass** der Endabschnitt (333, 433) nicht sphärisch ist und eine Mehrzahl Facetten (334, 434) um die Endabschnitte (333, 433) herum ausgebildet ist.

3. Sinkleine (20, 100, 200, 500) nach Anspruch 1, **dadurch gekennzeichnet, dass** eine konvergierende gekrümmte Oberfläche (335) zwischen dem Hauptteil (131, 231, 531) und dem Halsabschnitt (132) ausgebildet ist.

4. Sinkleine (20, 100, 200, 500) nach Anspruch 1, **dadurch gekennzeichnet, dass** eine konvergierende verjüngte Oberfläche (435) zwischen dem Hauptteil (131, 231, 531) und dem Halsabschnitt (132) ausgebildet ist.

5. Sinkleine (20, 100, 200, 500) nach Anspruch 1, **gekennzeichnet durch** hohle tröpfchenförmige Schnappverschlusselemente (142).

6. Sinkleine (100, 200, 20) nach Anspruch 5, **dadurch gekennzeichnet, dass** das Schnappverschlusselement (142) teilweise abgedeckt ist und Vorsprünge (144) auf zwei Seiten des Schlitzes (143) zwecks Festklemmung flexibel sind.

7. Schwimmleine (20, 100, 200, 500) nach Anspruch 6, **dadurch gekennzeichnet, dass** der Endabschnitt (133) sphärisch ist.

8. Sinkleine (20, 100, 200, 500) nach Anspruch 7, **dadurch gekennzeichnet, dass** der radiale Querschnitt des Endabschnitts (133, 333, 433) kleiner ist als der radiale Querschnitt des Hauptteils (131, 231, 531), damit ein radialer Querschnitt der Schnappverschlusselemente (142) über den radialen Querschnitt des Hauptteils (131, 231, 531) nicht hinausragt.

9. Sinkleine (20, 100, 200, 500) nach Anspruch 6, **dadurch gekennzeichnet, dass** der Querschnitt der Schnappverschlusselemente (142) teilweise geschnitten ist und eine verjüngte Kante (145) ist, die der Öffnung des Schlitzes (143) zugeneigt ist.

10. Sinkleine (20, 100, 200, 500) nach Anspruch 5-9, **dadurch gekennzeichnet, dass** der Hauptteil (131, 231, 531) zylindrisch ist.

11. Sinkleine (20, 100, 200, 500) nach Anspruch 5 - 10, **dadurch gekennzeichnet, dass** der Hauptteil (131, 231, 531) oval ist.

12. Sinkleine (20, 100, 200, 500) nach Anspruch 5 - 11, **dadurch gekennzeichnet, dass** mindestens ein Hauptteil (131, 231, 531) eine Gegengewichtkette ist.

13. Modularer Druckknopf (140) für die Sinkleine (20, 100, 200, 500) nach Anspruch 1, wobei der Druckknopf (140) zum Aufziehen einer Mehrzahl Sinkkörper (130, 230, 330, 430, 530) in gleichen Abständen konfiguriert ist, wobei jeder der Sinkkörper (130, 230, 330, 430, 530) einen Hauptteil (131, 231, 531) mit zwei Enden aufweist, die jeweils mit einem Halsabschnitt (132) und einem Endabschnitt (133, 333, 433) verbunden sind, wobei der Halsabschnitt (132) einen radialen Querschnitt aufweist, der kleiner ist als die radialen Querschnitte des Hauptteils (131, 231, 531) und des Endabschnitts (133, 333, 433), und wobei der Druckknopf (140) umfasst: eine biegbare Leine (141) und zwei hohle tröpfchenförmige Schnappverschlusselemente (142), die mit zwei Enden der Leine (141) verbunden sind, um eine Mehrzahl Endabschnitte (133, 333, 433) einzuschließen, wobei jedes der Schnappverschlusselemente (142) vom Mittelpunkt der entsprechenden Druckknöpfe (140) vergleichsweise weit entfernt ist und einen Schnappverschlussschlitz (143) mit U-förmigem Spalt umfasst, der derart konfiguriert ist, dass er zum Halsabschnitt (132) passt.

14. Druckknopf (140) nach Anspruch 13, **dadurch gekennzeichnet, dass** das Schnappverschlusselement (142) halb gedeckt ist und Vorsprünge (144) auf zwei Seiten des U-förmigen Spalt-Schnappverschlussschlitzes (143) zwecks Festklemmung flexibel sind.

15. Druckknopf (140) nach Anspruch 14, **dadurch gekennzeichnet, dass** der Querschnitt der Schnappverschlusselemente (142) teilweise geschnitten ist und eine verjüngte Kante (145) ist, die der Öffnung des Schlitzes (143) zugeneigt ist.

## Revendications

1. Filin plongeant d'outil de pêche (20, 100, 200, 500) comprenant :
une âme de cordage de module (110, 510) configurée pour accrocher une pluralité d'éléments plongeants (130, 230, 330, 430, 530) à intervalles égaux, chacun des éléments plongeants (130, 230, 330, 430, 530) ayant un corps principal (131, 231, 531) ayant deux extrémités raccordées chacune à une partie de col (132) et à une partie terminale (133, 333, 433), dans lequel la partie de col (132) a une taille transversale radiale inférieure aux tailles transversales radiales du corps principal (131, 231, 531) et de la partie terminale (133, 333, 433), l'âme de cordage de module (110, 510) comprenant en outre une pluralité de fixations par pression modulaires (140), chaque fixation par pression modulaire (140) comprenant une ligne pliable (141) et deux éléments de fixation par pression creux (142) raccordés aux deux extrémités de la ligne pliable (141) pour loger les parties terminales (133, 333, 433), et chacun des éléments de fixation par pression creux (142) est relativement à distance du centre des fixations par pression modulaires (140) correspondantes et ayant une fente de fixation par pression à espace en forme de U (143) configurée pour monter la partie de col (132) ; et un filin tissé de recouvrement (120) entrelacé pour recouvrir l'âme de cordage de module (110, 510).

2. Filin plongeant d'outil de pêche (20, 100, 200, 500) selon la revendication 1, **caractérisé en ce que** la forme de la partie terminale (333, 433) est non sphérique, et une pluralité de bords à facettes (334, 434) sont formés autour des parties terminales (333, 433).

3. Filin plongeant d'outil de pêche (20, 100, 200, 500) selon la revendication 1, **caractérisé en ce qu'**une surface incurvée convergente (335) est formée entre le corps principal (131, 231, 531) et la partie de col (132).

4. Filin plongeant d'outil de pêche (20, 100, 200, 500) selon la revendication 1, **caractérisé en ce qu'**une surface progressivement rétrécie convergente (435) est formée entre le corps principal (131, 231, 531) et la partie de col (132).

5. Filin plongeant d'outil de pêche (20, 100, 200, 500) selon la revendication 1, **caractérisé par** des éléments de fixation par pression creux en forme de gouttelette (142).

6. Filin plongeant d'outil de pêche (20, 100, 200, 500) selon la revendication 5, **caractérisé en ce que** l'élément de fixation par pression creux (142) est à moitié recouvert, et des saillies (144) sur les deux côtés de la fente de fixation par pression à espace en forme de U (143) sont flexibles pour le serrage.

7. Filin plongeant d'outil de pêche (20, 100, 200, 500) selon la revendication 6, **caractérisé en ce que** la forme de la partie terminale (133) est sphérique.

8. Filin plongeant d'outil de pêche (20, 100, 200, 500) selon la revendication 7, **caractérisé en ce que** la taille transversale radiale de la partie terminale (133, 333, 433) est inférieure à la taille transversale radiale du corps principal (131, 231, 531) de sorte que la taille transversale radiale des éléments de fixation par pression creux (142) ne fait pas saillie sur la taille transversale radiale du corps principal (131, 231, 531).

9. Filin plongeant d'outil de pêche (20, 100, 200, 500) selon la revendication 6, **caractérisé en ce que** la section transversale des éléments de fixation par pression creux (142) est à moitié découpée et est un bord progressivement rétréci (145) penché vers l'ouverture de la fente de fixation par pression à espace en forme de U (143).

10. Filin plongeant d'outil de pêche (20, 100, 200, 500) selon les revendications 5 à 9, **caractérisé en ce que** la forme du corps principal (131, 231, 531) est cylindrique.

11. Filin plongeant d'outil de pêche (20, 100, 200, 500) selon les revendications 5 à 10, **caractérisé en ce que** la forme du corps principal (131, 231, 531) est ovale.

12. Filin plongeant d'outil de pêche (20, 100, 200, 500) selon les revendications 5 à 11, **caractérisé en ce qu'**au moins un corps principal (131, 231, 531) est une chaîne de contrepoids.

13. Fixation par pression modulaire (140) pour un filin plongeant d'outil de pêche (20, 100, 200, 500) selon la revendication 1, dans laquelle ladite fixation par pression modulaire (140) est configurée pour accrocher une pluralité d'éléments plongeants (130, 230, 330, 430, 530) à intervalles égaux, chacun des éléments plongeants (130, 230, 330, 430, 530) ayant un corps principal (131, 231, 531) ayant deux extrémités raccordées chacune à une partie de col (132) et à une partie terminale (133, 333, 433), dans laquelle la partie de col (132) a une taille transversale radiale inférieure aux tailles transversales radiales du corps principal (131, 231, 531) et de la partie terminale (133, 333, 433), la fixation par pression modulaire (140) comprenant : une ligne pliable (141) ; et deux éléments de fixation par pression creux en forme de gouttelette (142) raccordés aux deux extrémités de la ligne pliable (141) pour loger une pluralité de parties terminales (133, 333, 433), chacun des éléments de fixation par pression creux (142) étant relativement à distance du centre des fixations par pression modulaires (140) correspondantes et a une fente de fixation par pression à espace en forme de U (143) configurée pour monter la partie de col (132).

14. Fixation par pression modulaire (140) selon la revendication 13, **caractérisée en ce que** l'élément de fixation par pression creux (142) est à moitié recouvert, et des saillies (144) sur les deux côtés de la fente de fixation par pression à espace en forme de U (143) sont flexibles pour le serrage.

15. Fixation par pression modulaire (140) selon la revendication 14, **caractérisée en ce que** la section transversale des éléments de fixation par pression creux (142) est à moitié découpée et est un bord progressivement rétréci (145) penché vers l'ouverture de la fente de fixation par pression à espace en forme de U (143).
